# EUROPEAN PATENT APPLICATION

(11) **EP 4 290 012 A2**
(43) Date of publication of application: **13.12.2023**
(21) Application number: 23196881.9
(22) Date of filing: 07.04.2016
(51) Int. Cl.: E01D 22/00

(54) **MOBILE ROBOT STATION AND REPAIR METHOD**

(30) Priority: 07.04.2015 NL 2014590
(62) Divisional of application: 16164341.6
(71) Applicant: VolkerWessels Intellectuele Eigendom B.V., 3826 PA Amersfoort (NL)
(72) Inventor: van Buuren, Henrie, 4131 NJ Vianen (NL)
(74) Representative: Nederlandsch Octrooibureau

(57) **Abstract**

Mobile work station for performing work on an existing construction, comprising an industrial robot arm being adapted to operate a tool, wherein the mobile work station consists of a moveable support frame that can be placed in a stable and temporary position at a place where the robot arm is to perform work on the existing construction, said support frame being adapted to form a barrier to human access to a work area delimited by the support frame and to delimit a spatial area within which the robot arm operates, wherein the robot arm is a three, five, six or seven axis robot arm, which is mounted overhead to the support frame, and wherein the support frame carries peripheral equipment for the robot arm.

## Description

The present invention relates to:
1. Repair of an orthotropic steel highway bridge deck.
2. Mobile work station with industrial robot arm.
3. The combination of 1 + 2

### 1. Repair of an orthotropic steel bridge decksteel highway bridge deck.

Particularly due to heavy freight traffic, a steel bridge deck (also called: bridge roadway), in particular an orthotropic steel bridge roadway, is increasingly prone to fatigue cracking. By removing the asphalt pavement of asphalt concrete, which is normally present on top of the bridge roadway, from the bridge deck, the steel surface is exposed in order to be inspected and, if necessary, to be repaired.

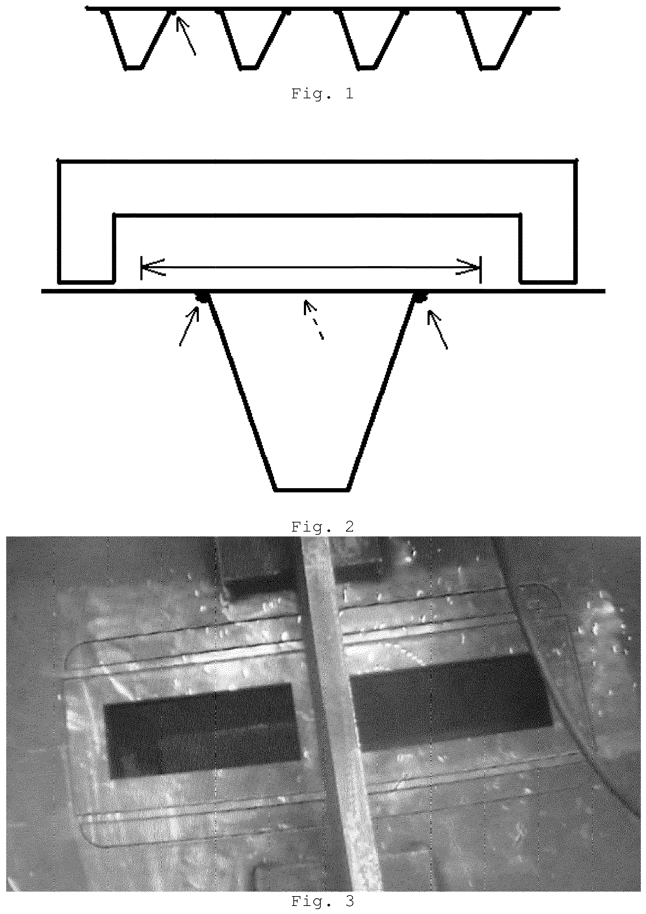

Fig. 1 shows a schematic cross-sectional view of the bridge deck, a horizontal steel plate with V-shaped or trough-shaped stiffener (stiffening trough)profiles welded to the bottom at the bottom thereof, the arrow indicates the location of the weld bead.

Fig. 2 is a view to clarify details such as the location of the weld bead (see arrows) between the bridge deck and stiffening trough. In a cracked bridge deck (the dotted arrow indicates the typical crack location), the bridge deck must be replaced over the area indicated by the horizontal arrow (for a length transverse to the drawing paper of approximately 1 meter) with a slightly thicker steel plate (thus an area on either side, well outside the place of attachment between the bridge deck and stiffening trough). During replacement, the stiffening trough must remain in place and be welded to the thicker steel plate in the original manner. During the repair, a temporary bridge structure welded above the bridge deck (so-called "Kram" [English: staple]; a 8 cm thick solid steel plate) retains the shape of the repair area. This staple is also roughly shaped like an upside-down U.

According to the known procedure, a worker located below the bridge deck removes the weld bead between the deck and the stiffening trough.

The invention avoids the removal of the weld bead by a worker underneath the bridge deck, thereby saving time and money and moreover allowing the work to be mechanized. To this end, a start is made by cutting open an inspection hole, as shown in Fig. 3. The inspection hole is well within the weld beads, of the stiffening trough.

Via the inspection hole, from the top of the bridge deck, the position of the stiffening trough can be precisely measured (for example by insertion of a probe through the inspection hole), and on the basis of this measurement, the original bridge deck is cut away to the prescribed size, wherein two strips of the bridge deck are left, which precisely overlap with the upright walls of the stiffening trough. The photo above shows the middle, wide, slab with the inspection hole and a narrow slab on both sides of it, which are still in place in the bridge deck and cut loose, and between a narrow and the middle wide slab in each case the still on the stiffening trough and the rest of the bridge deck fixed strip.

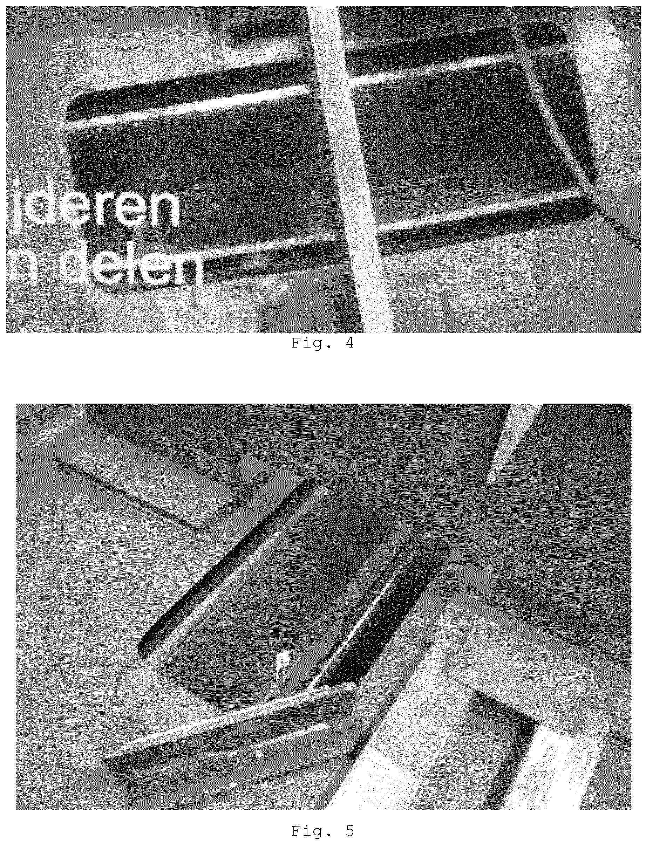

The photograph of FIG. 4 shows the bridge deck cut open to the prescribed size, except for two strips that coincide with the position where the upright walls of the stiffening trough connect to the bridge deck. The middle wide slab and the two narrow slabs on either side have now been removed to allow a view down into and along the stiffening trough.

Now these two strips are also cut-loose (see Fig. 5), as a result of which the upper edges of the upright trough walls are slightly lowered so that the thicker repair plate with its top surface is flush with the top surface of the rest of the bridge deck.

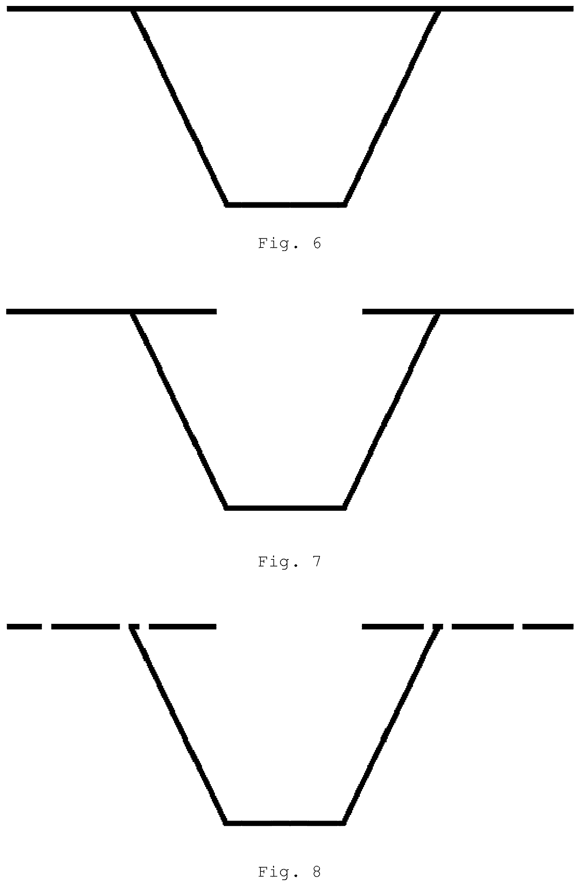

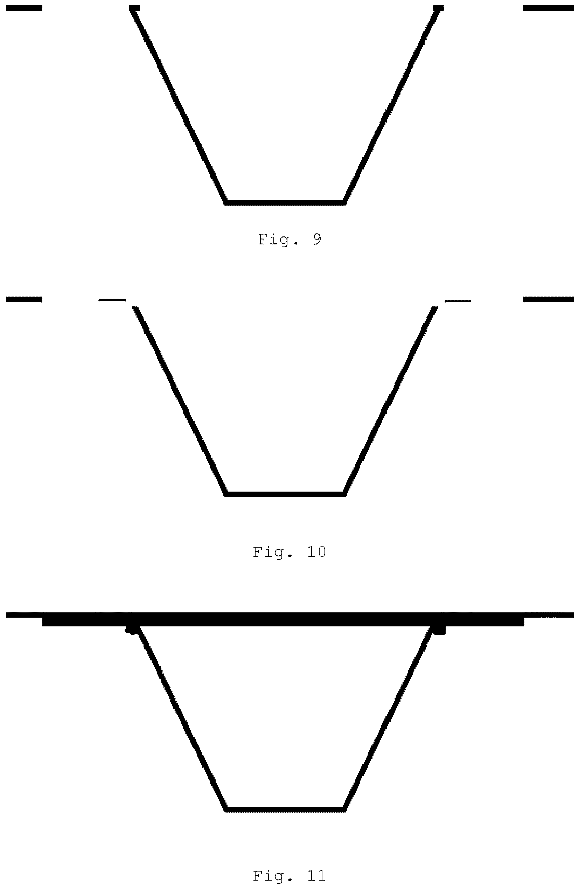

The repair procedure is summarized as follows by way of sketched cross-sections of a piece of bridge deck with an associated stiffening trough underneath.
step 1 (Fig. 6): start of the repair.
step 2 (fig. 7): making of an inspection hole
step 3 (Fig. 8): cutting loose the middle wide slab and a narrow slab on each side, in between are the on the stiffening trough welded strips
step 4 (Fig. 9): removal of the dissected middle wide and the narrow slabs on both sides
step 5 (fig. 10): cutting loose and removing the strips so that the upper edge of the stiffening trough is below its original level (indicated by the thin line).
step 6 (Fig. 11): placing the (thicker) repair plate and re-welding (from below the bridge by a welder) of the stiffening trough. The repair plate is welded to the surrounding bridge deck by the industrial robot located above the bridge deck.

These steps 1 to 6 can be carried out in any other sequence. One or more of the steps 1 to 6 may be omitted.

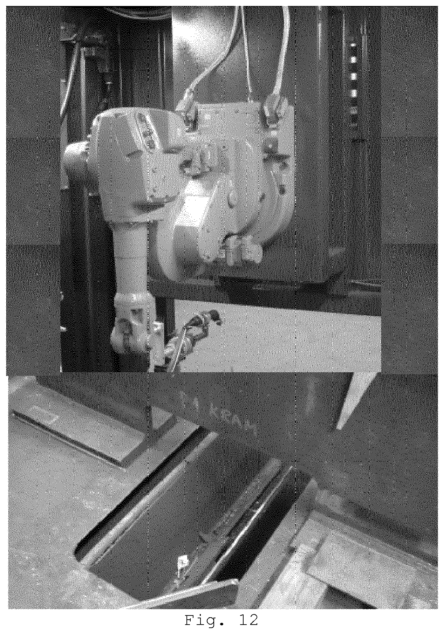

Fig. 12 shows an Industrial 6-axis robot arm fixedly mounted to a movable structure standing free and stable on top of the bridge deck. The robot arm is suspended over the top surface of the bridge deck and has cut loose the inspection hole and then the middle wide slab and the two narrow slabs on both sides, and then the strips with the weld bead to the stiffening trough so that the stiffener through is cut loose by the robot. The temporary staple welded to the top of the bridge deck is partially visible, in particular one of the feet with which the staple is attached to the bridge deck.

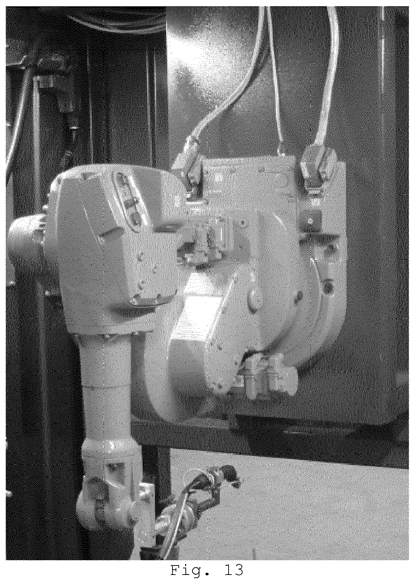

Fig. 13 shows in detail the six-axis robot arm with horizontal pivot axis of the shoulder joint (Axis 1), mounted on a movable structure, for example inside a shipping container or at the back of a truck or forklift.

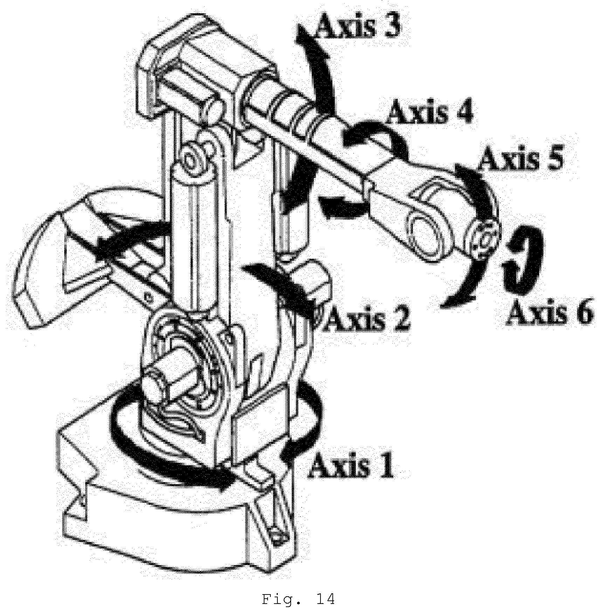

Fig. 14 shows the designation of the axes of a 6-axis robot arm, in this picture the pivot axis of the shoulder joint (Axis 1) is oriented vertically, this is the usual orientation of this type of robot arm.

### 2. Mobile work station with industrial robot arm.

A lot of work to an existing construction is performed manually. This is expensive, requires a lot of manpower, is slow and inaccurate and the quality varies.

The inventor has devised a solution in the form of a mobile work station equipped with an industrial robot arm of which the "hand" is adapted to operate a tool as desired, such as a cutting torch, a drilling or milling tool or a welding torch or other tool with which an industrial robot arm can be equipped.

Various disadvantages of manual work can be reduced or avoided with the invention.

The invention can be used, for example, for repairing a fatigue crack in the steel bridge roadway of a highway bridge. Many other applications are also conceivable.

Preferably, one or more of the following applies: the robot arm is mounted "overhead" (preferably permanently) on a support frame; the support frame is arranged to be moved and to be placed in a stable and temporary position at the place where the robot arm is to perform its work; the support frame is constructed so that during the time it is stored and / or is in operation, the robot arm remains within the area delimited by the support frame, wherein preferably, the support frame is configured to form a barrier to human access to the working area of the robot, for example, in that the support frame comprises a (preferably substantially completely enclosing) shell structure (for example, access preventing side walls and optionally a roof), which barrier may be equipped with a (e.g. with a door) closable access opening; the shell structure is self-supporting (monocoque); the robot is mounted in a fixed location on the support frame; the support frame has dimensionally stable support edges, preferably fixed to the support frame, and which are positioned so that they provide a stable three- or more-point support; the support frame has retractable wheels; the support frame forms a tent or canopy; the support frame carries the peripheral equipment for the robot, such as the control unit, data logger, energy source, power generator, batteries, compressed air generator, fuel tank, tools, power supply for the tools, such as a gas tank; the mobile work station is an independent and / or completely self-sufficient unit; the work station includes wall units that delimit a spatial area within which the robot operates; a measure disclosed in the following, irrespective of the measures in combination with which this measure has been presented:

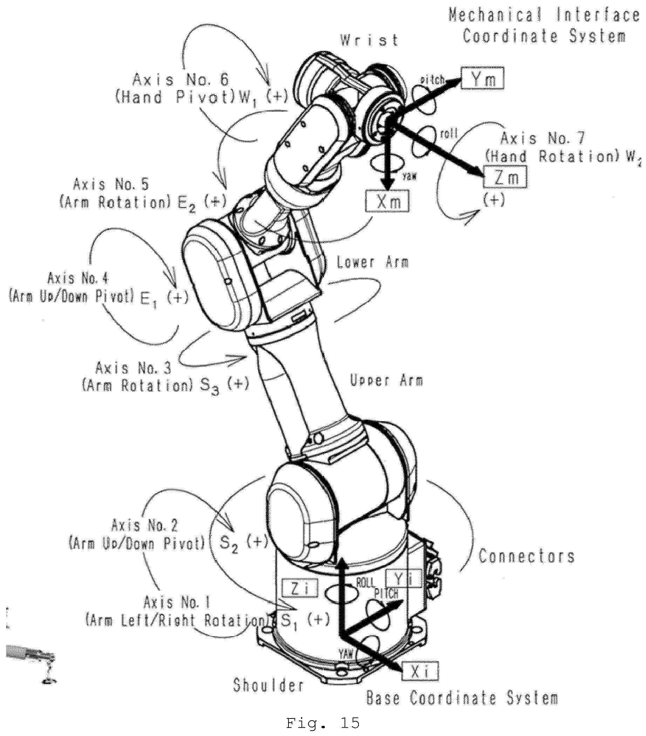

Fig. 15 shows a 7-axis robot arm, axis No. 3 is missing on a 6-axis robot arm.

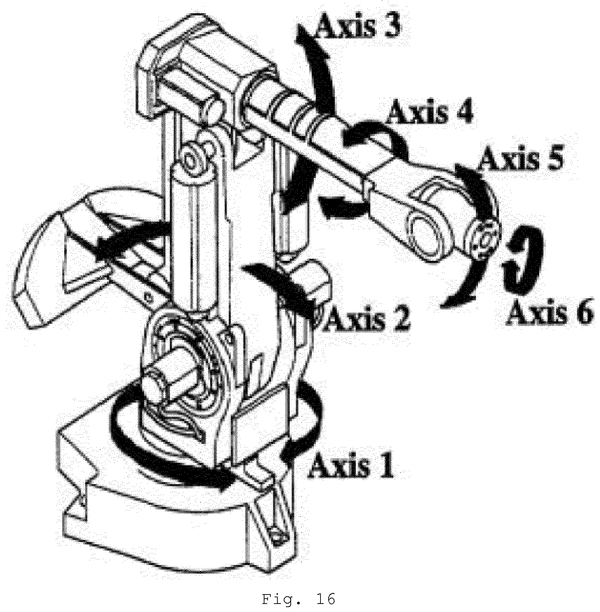

Fig. 16 shows a 6-axis robot arm, compared to the 7-axis robot arm, the upper arm cannot rotate about its own longitudinal axis. The axis of the shoulder joint (Axis 1) is vertical when the base is set at the bridge deck, as shown, and horizontal when the base, tilted 90 degrees with respect to this view, is overhead ( "vertically overhead") mounted, and vertical again when the base, tilted 180 degrees with respect to this view, is overhead ( "horizontal overhead") mounted.

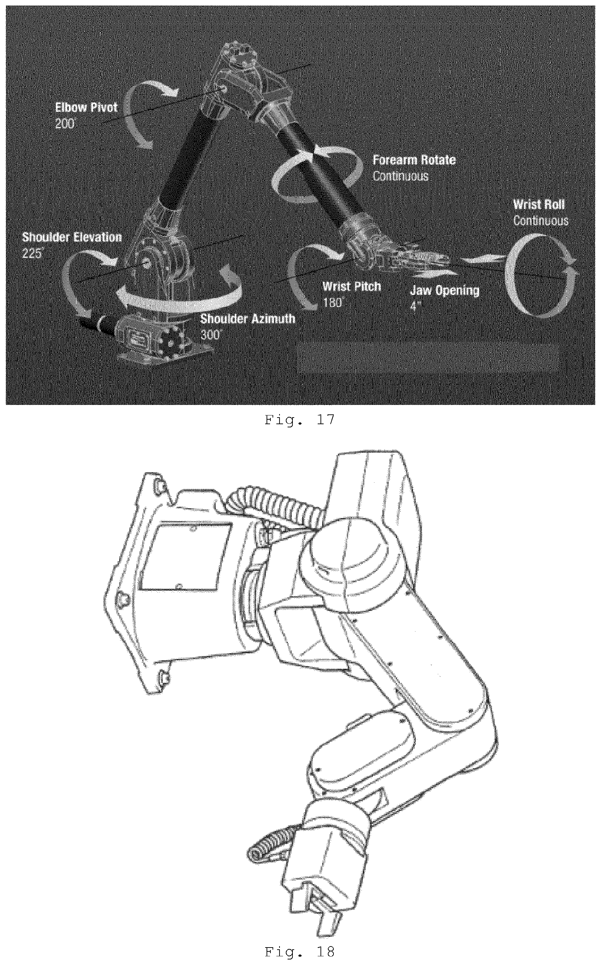

Fig. 17 shows the maximum swing angles in a 6-axis robot arm.

Fig. 18 shows a 6-axis robot arm, overhead ( "vertically overhead") mounted, its free end can cover a large contiguous portion of the surface of the bridge deck. The base is fixedly mounted to an upright or vertical support, the support is directly or indirectly loose on the bridge deck. The axis of the shoulder joint is horizontal.

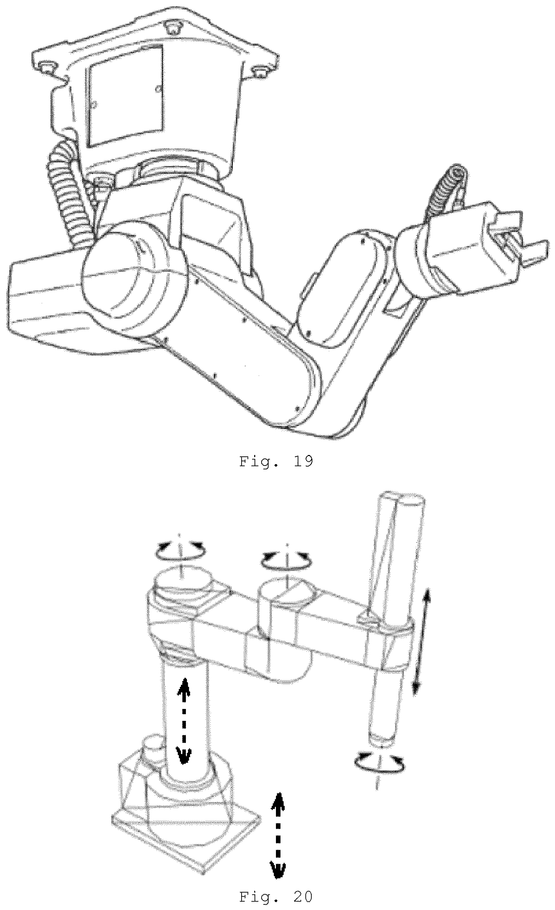

Fig. 19 shows the same 6-axis robot arm, overhead ( "horizontal overhead") mounted, which can cover a large surface area of the bridge deck located below the robot arm.

Fig. 20 shows a 3-axis robot arm with 3 parallel axes and between the forearm and the hand a linear (e.g. vertically) movable intermediate piece to adjust the level of the hand (at the lower end of the intermediate piece). Forearm and upper arm move with vertical axes parallel to the bridge deck, so that the tool at the free lower end of the robot arm (at the free lower end of the intermediate piece) can cover a large surface area of the bridge deck. In addition or alternatively to the vertically movable intermediate piece, the level of the base or the location of the upper arm along the adjoining vertical column (the "trunk") connecting to the base can be adjusted as is indicated by dotted arrows.

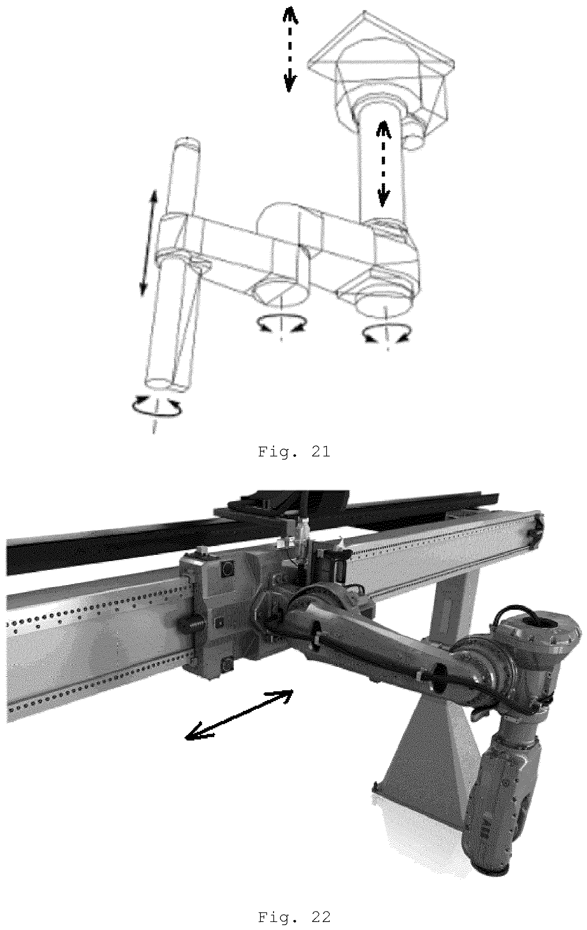

Fig. 21 shows the same 3-axis robot arm of Fig. 20, now overhead ( "horizontal overhead") mounted, with its base suspended under a horizontal or vertical support.

Fig. 22 shows a 5-axis overhead ( "vertically overhead") mounted robotic arm, sliding along the portal as the arrow indicates, portal being located horizontally above the bridge deck, a support leg resting freely on the bridge deck (one of which is visible) is mounted at each end of the portal and supports the portal. Assembly of two support legs and portal, which carries a robot arm, can be moved over the bridge deck with wheels at lower end of support legs (not visible). Or this assembly can be lifted by a hoisting instalation, such as a forklift, to be moved across the bridge deck, for which purpose the assembly can be equipped at a high and / or low or other suitable level with recesses for the forks of a forklift truck or with other hoisting facilitating means such as pad eyes. Compared to a 6-axis robot arm, the axis of the shoulder joint (Axis 1) is rigid.

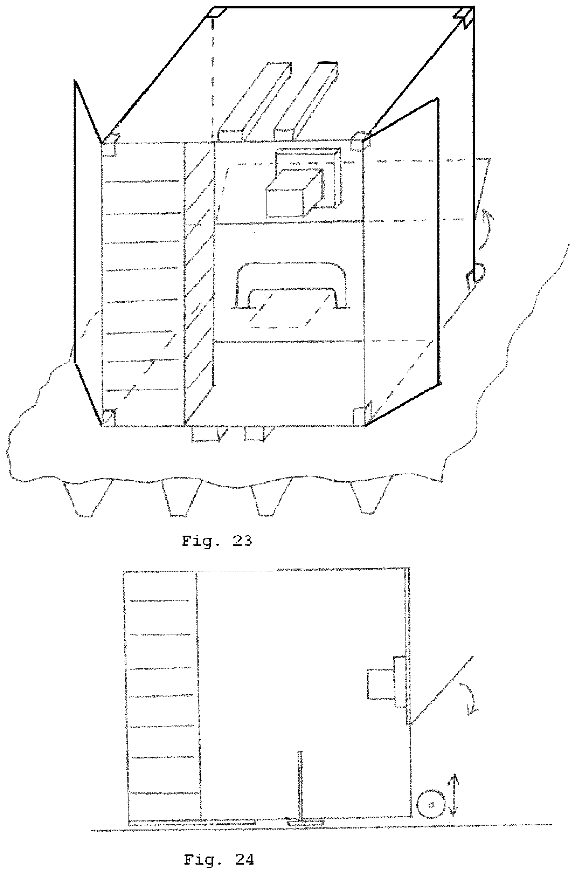

Fig. 23-24 show a perspective and sectional side view of a shipping container (one example of a self-supporting shell structure) with corner castings, in which an industrial 6-axis robot arm is mounted overhead. A part of the bottom of the container has been removed. The top wall and the two side walls have been left intact, the back wall has been modified. The container is placed directly on the bridge deck, over the staple. The robot welds the staple to the bridge deck and then cuts a hole in the bridge deck. The lower part of the fixed back wall, to which the robot arm is mounted, is mounted pivotally around a horizontal hinge and shown in the open position so that the shipping container can be driven over the staple. The shipping container has retractable wheels on one end (the fixed wall that supports the robot arm) and by lifting the other (opposite) end (equipped with doors as shown) the shipping container can drive on the bridge deck. The shipping container contains a cabinet that contains the power supply and control for the robot arm. The robot arm is equipped with a welding torch and a cutting torch, for which the power supply is located in the shipping container. The shipping container is equipped with recesses at the top and bottom, in which the forks of a forklift can be inserted to lift the shipping container.

The shipping container thus forms a sturdy support frame for the robot arm and at the same time a bottomless canopy for the working area of the staple. Preferably, the underside of the support frame is suitable for placing the robot arm stably on the bridge deck, so that during operation of the robot, freight traffic passing on the adjacent roadway of the bridge deck cannot bring the robot arm in an inconvenient motion. The steel shipping container, which rests with its flat steel underside on the bridge deck, provides such a stable support frame.

The robot arm has a weight of at least 100 or 150 or 175 or 200 kilograms.

The invention encompasses all disclosed features in an individual sense, independent of the combination in which they are presented, and also in any arbitrary combination or permutation with one or more other disclosed features, in an individual sense.

## Claims

1. Mobile work station for performing work on an existing construction, comprising an industrial robot arm being adapted to operate a tool, such as a cutting torch, a drilling or milling tool or a welding torch,
wherein the mobile work station consists of a moveable support frame that can be placed in a stable and temporary position at a place where the robot arm is to perform work on the existing construction, said support frame being adapted to form a barrier to human access to a work area delimited by the support frame and to delimit a spatial area within which the robot arm operates,
wherein the robot arm is a three, five, six or seven axis robot arm, which is mounted overhead to the support frame, and
wherein the support frame carries peripheral equipment for the robot arm, said peripheral equipment comprising one or more of: a control unit, data logger, energy source, power generator, batteries, compressed air generator, fuel tank, tools for use with the robot arm, and power supply for the tools.

2. The mobile work station according to claim 1, wherein the barrier comprises a closable access opening.

3. The mobile work station according to claim 1 or 2, wherein the support frame comprises a shell-structure which comprises side walls and optionally a roof

4. The mobile work station according to claim 3, wherein the shell-structure is self-supporting.

5. The mobile work station according to claim 3 or 4, wherein the shell structure completely encloses the work area.

6. The mobile work station according to any one of the preceding claims, wherein the robot arm is mounted in a fixed location on the support frame.

7. The mobile work station according to any one of the preceding claims, wherein the mobile work station is an independent and/or completely self-sufficient unit.

8. The mobile work station according to any one of the preceding claims, wherein the support frame has dimensionally stable support edges, which are positioned such as to provide a stable, three- or more-point support, wherein the support edges are preferably fixed to the support frame.

9. The mobile work station according to any one of the preceding claims, wherein the support frame is provided with retractable wheels.

10. The mobile work station according to any one of the preceding claims, wherein the robot arm has a weight of at least 100 kilograms, preferably 150 kilograms, more preferred at least 175 kilograms, or most preferred at least 200 kilograms.

11. The mobile work station according to any one of the preceding claims, wherein the support frame is a container and wherein a part of a bottom of the container is missing, such that the container forms a sturdy support frame for the robot arm and/or a bottomless canopy.

12. The mobile work station according to claim 11, wherein the container comprises a back, which back wall carries the robot arm, and a front wall, which comprises an access opening for personnel, wherein the back wall optionally comprises a lower part which is pivotally mounted about a horizontal hinge.

13. The mobile work station according to claim 11 or 12, wherein the container further comprises a top wall and/or two side walls, which are preferably substantially closed, and wherein one or more of the respective bottom, top, side, front and back walls are fixed.

14. The mobile work station according to any one of claims 11 to 13, wherein the container is equipped with recesses at the top and bottom, adapted for receiving forks of a forklift truck therein for lifting the container.

15. The mobile work station according to any one of the preceding claims, wherein the robot arm is mounted vertically or horizontally overhead.
